Europäisches Patentamt

European Patent Office

Office européen des brevets

(11) Publication number: **0 194 712 B1**

## EUROPEAN PATENT SPECIFICATION

(45) Date of publication of patent specification: **17.06.92**  (51) Int. Cl.⁵: **B23K 9/16**

(21) Application number: **86200289.6**

(22) Date of filing: **25.02.86**

(54) **Gas-protected arc welding with non-fusible electrodes.**

(30) Priority: **01.03.85 NL 8500586**

(43) Date of publication of application:
**17.09.86 Bulletin 86/38**

(45) Publication of the grant of the patent:
**17.06.92 Bulletin 92/25**

(84) Designated Contracting States:
**DE FR GB NL**

(56) References cited:
**EP-A- 0 012 947**
**FR-A- 1 049 179**
**US-A- 3 437 787**

(73) Proprietor: **Koninklijke Schelde Groep B.V.**
**Glacisstraat 165 P.O. Box 16**
**NL-4381 SE Vlissingen(NL)**

(72) Inventor: **Van der Goes, Jacobus Johannes**
**Steengrachtstraat 55**
**NL-4386 AS West-Souburg(NL)**

(74) Representative: **van der Beek, George Frans,**
**Ir. et al**
**Nederlandsch Octrooibureau Schevening-**
**seweg 82 P.O. Box 29720**
**NL-2502 LS 's-Gravenhage(NL)**

Rank Xerox (UK) Business Services

## Description

The present invention relates to a gas-protected arc welding method with non-fusible electrodes, by the use of at least two nonfusible electrodes, which are arranged near the welding seam, opposite each other on either side of the workpieces to be joined to each other by welding and in which a current is supplied to each electrode having an intensity such that the partial molten baths formed by the welding electrodes on either side come into contact with one another, the said welding electrodes being displaced in the welding direction with respect to each other.

Such method is disclosed in French Patent 1,049,179.

In other known arc welding methods one or more welding electrodes are arranges on one side of the workpieces to be welded to each other opposite or near the welding seam. As a result of the supply of the heat of the arc from only one side of the workpieces and in order to achieve complete welding through of the seam to be welded, there is produced, particularly in the case of relatively thick workpieces, a large funnel-shaped molten bath having a large volume which, particularly on the welding electrode side, may assume large dimensions. This means in particular that welding cannot be performed in any position because the relatively heavy melt, both under the influence of gravity and arc pressure, can readily flow away. In addition, because the melt has to penetrate deeply, more material is melted than is necessary and consequently also more heat is supplied than necessary. A funnel-shaped melt of this kind is furthermore unfavourable as regards the shrinkage stresses during cooling down. The regions affected by heat of the parts to be welded to each other are also relatively large and unfavourable.

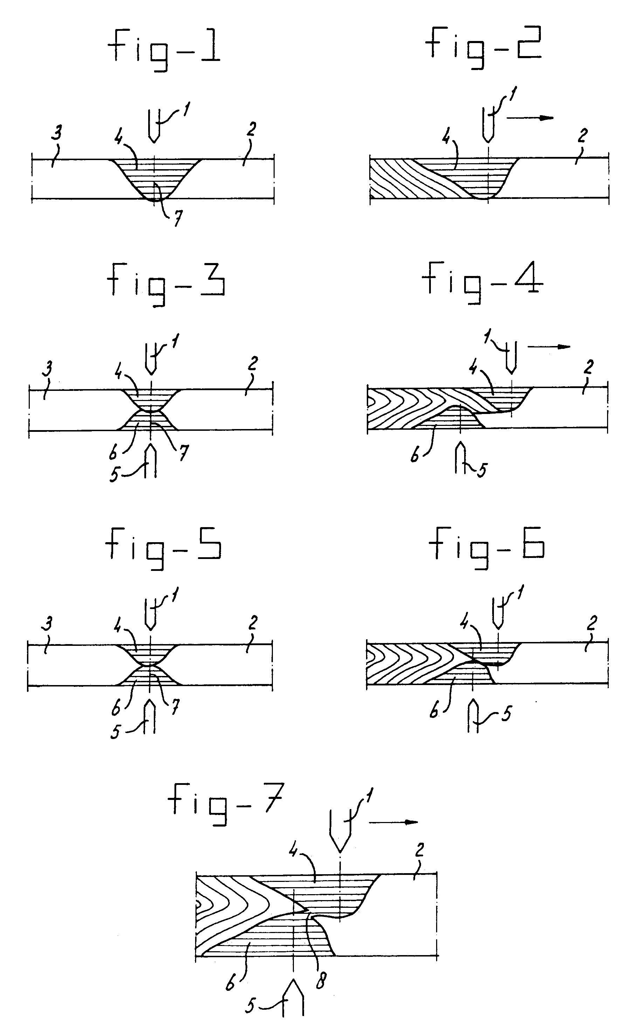

The accompanying Figures 1 and 2 show a welding arrangement of this type respectively in cross-section transverse to the seam to be welded between the two workpieces 2 and 3 and in longitudinal section. By means of the single welding electrode 1 a molten bath 4 is produced in the workpieces to be welded to each other, which have a thickness of 5 mm, at a current of 300 amperes, which molten batch has relatively large dimensions.

The French Patent 1,049,179 relates to a welding method for solving problems upon welding aluminium. In general the maximum aluminium plate thickness for welding in one passage is 2-3 mm. For welding thicker plates at least another successive passage of the welding electrode is necessary. Also for aluminium welding usually an alternating current is used whilst in connection with reignition problems another alternating current is superimposed having a much higher frequency than the welding current frequency. The above French Patent relates to the problem of maximum plate thickness for welding aluminium and to the problem of low efficiency because of the alternating welding current. These particular aluminium welding problems are solved by the measures of the invention in this French Patent, i.e. using two serially connected arcs of equal current strength, powered by one alternating welding current transformer.

It is an object of the present invention, however, to provide a welding method by means of which workpieces can be welded in any position of these workpieces and notwithstanding giving a complete weld through, also in case of relatively thick workpieces, such as plates.

The above disadvantages are now avoided and the above object is achieved in the method of the present invention, which is characterized in that the welding electrodes are supplied in parallel with current from separate and separately adjustable welding sources, in which these welding currents are adjusted such with respect to each other that the trailing bath of the one electrode is in contact with the back edge of the leading bath of the other electrode through a constricted channel of molten metal, such that two baths are held joined to each other by the capillary action of the constricted channel.

By using separate welding sources the welding current can be adjusted separately, so that any preferable position for the welds as well as the volume of each weld can be obtained, giving a small "channel" of molten material between the welds for keeping the two welds in position. Preferably direct current with negative electrodes is used as welding current, so that smaller electrode diameters can be used and the arc pressure will be constant. This gives a higher penetration per electrode, hence thicker plates can be welded with direct current than with alternating current.

The method according to the invention yields several advantages over the known methods. An aggregate molten bath is obtained having a much smaller volume than when the welding electrode or electrodes are placed only on one side of the welding seam as described above. This is particularly advantageous in the case of thick workpieces if complete welding through is required. Less welding energy needs to be supplied. The total current of the two welding electrodes for the welding of the same workpieces as stated above is, in the case of only one electrode, only 200 A instead of 300 A. The aggregate molten bath which is obtained in the method according to the invention consists of two much smaller molten baths which are in contact with each other via a constricted channel of molten material. These two molten baths are held joined to each other, inter alia, by means of the molten material through the capillary action of the constricted channel so that the molten baths do not flow away and welding can therefore easily be carried out in any position. Other factors which contribute to this are that the "arc pressures" largely cancel each other out, and the large surface/volume ratio of the molten bath, as a result of which relatively large cohesive forces are operative on the molten bath from the sides (adhesion).

The most important measure of the invention is that the two welding electrodes situated opposite each other are mutually displaced in the welding direction. This alone can result in a sufficiently narrow connecting channel consisting of molten material between the two partial molten baths. Of these partial molten baths at least one must penetrate somewhat beyond the centre of the parts to be welded to each other when viewed in cross-section in the plane of the electrodes placed opposite each other. The two molten baths must achieve such dimensions and be mutually displaced so that they at least contact each other and at the position of this contact point flow into each other, and in particular, the leading molten bath at the rear side and the trailing molten bath at the front side, but also not much more. An important requirement is that the channel between the molten baths has a cross-section such that the seam to be welded is completely included by the aggregate molten bath and the material at the position of the weld has thus been fluid everywhere. Furthermore, this channel must remain so narrow that a sufficient capillary action results from it to hold the two larger partial molten baths situated on either side of the channel joined to each other. All this can be controlled by means of the current fed to each welding electrode, the mutual distance and the velocity, everything being considered with respect to the thickness and the material of the workpieces.

Because the molten baths immediately follow each other and the heat of the first molten bath has more time to penetrate into the material, the heat input of the directly following second molten bath can be reduced, The first molten bath may therefore assume larger dimensions than the second, the latter not having to penetrate, for example, beyond the centre of the workpieces. This means that a complete welding through can be achieved with still less heat than if the two welding electrodes had been arranged on one side or had not been displaced mutually in the direction of movement.

The distance between the free extremities of the two welding electrodes viewed in the direction of travel is preferably at least approximately 1/3 of the thickness to be welded through of the parts to be welded.

The difference in heat input between the partial molten baths may also depend on the mutual position of the workpieces to be welded together. If two workpieces have to be welded at right angles to each other, considerably less heat may be supplied in the corner than on the outside.

The method according to the invention is particularly suitable for bringing about a direct butt welding joint between, for example, the butt end of a pipe and the edge of an opening in a pipe plate on the face of the plate. Apart from this, a particularly advantageous application of the invention must be seen in the automatic welding of, for example, pipes to pipes, pipes to a pipe plate or pipe flange, flangeless pipes to pressure holders and/or headers. In all these cases the mutual displacement of the two welding electrodes will be such that, viewed in the direction of the circumference of the circular welding seam, one of the rotating welding electrodes leads the other.

In addition the invention relates to a welding device for carrying out the abovenamed method, which device is provided with at least two non-fusible welding electrodes attached to a carrier. According to the invention these two electrodes attached to a carrier are arranged opposite each other with their free extremities facing each other and are mutually adjustable with sufficient spacing to accommodate the seam to be welded of the two workpieces to be welded to each other between the free extremities, which electrodes are furthermore displaced with respect to each other viewed in the direction of movement during the welding with respect to the workpieces to be welded.

Each welding electrode is connected to a separate current source so that the welding currents can be adjusted completely independently of each other.

The invention will now be explained by reference to some exemplary embodiments which are depicted in the diagrams.

Figure 1 shows a transverse section of the arrangement of the known welding method mentioned above with a single welding electrode and a molten bath;

Figure 2 shows the arrangement according to Figure 1 in longitudinal section;

Figure 3 shows a transverse section of an arrangement with two welding electrodes placed on either side of the workpieces to be welded;

Figure 4 shows the arrangement according to Figure 3 in longitudinal section;

Figure 5 shows a transverse section of the arrangement according to the invention;

Figure 6 shows the arrangement according to Figure 5 in longitudinal section;

Figure 7 shows the longitudinal section according to Figure 6 on a somewhat larger scale;

Figure 8 shows the arrangement, partially in transverse section, of the parts to be welded to each other in the butt welding of a pipe to a plate or nipple to a convex face;

Figure 9 shows the same arrangement as Figure 8, but seen in the longitudinal direction of the pipe.

In Figures 1 and 2 the parts to be welded to each other are depicted in cross-section with the reference numerals 2 and 3. Here two components butted against each other along the seam 7 to be welded and having a thickness of 5 mm are involved. In Figure 2 the welding seam between the two components is situated in the plane of the drawing. The single welding electrode 1, which produces the molten bath 4, extends along the line 7.

As is evident in particular from Figure 2, there is a relatively large molten bath 4. If the melting through is sufficient at the lower side in the Figure, this molten bath can easily flow away through the opening produced, while it will be clear that with a vertical arrangement or above the head, the relatively large molten bath can be held in place with difficulty or no longer held in place at all.

According to the invention this one large molten bath is now split into two small ones situated on either side of the workpieces to be welded to each other, which two molten baths, however, include the seam to be welded. Each molten bath is produced by means of an associated, separately fed electrically, electrode as in the subsequent Figures.

In Figures 3 and 4 an arrangement is depicted which does indeed partially conform to the invention, but with which the desired effect is not yet achieved, i.e. that the two molten baths 4 and 6 flow into each other.

Here the welding electrodes 1 and 5 are indeed displaced with respect to each other and each produce a separate molten bath 4 or 6 respectively. These electrodes are, however, in this case mutually displaced through a distance of 6 mm, somewhat greater than the thickness of the workpieces to be welded to each other, which is equal to 5 mm as stated. The two welding electrodes are moved with respect to the parts to be welded in the direction indicated by the arrows and, indeed, both of course with the same velocity.

Figure 4 shows the spreading of the molten baths 4 and 6 to the state in which they are situated too far from each other to achieve the effect intended by the invention, i.e. the flowing into each other of the two molten baths 4 and 6. The two molten baths do indeed extend beyond the centre so that the seam will melt entirely, and the two molten baths are relatively small compared with the single molten bath 4 in Figures 1 and 2, but the current for each of the welding electrodes is in this case 140 A with the same thickness of 5 mm of the plates to be welded to each other, i.e. 280 A in total. This is therefore only slightly less than the 300 A in the arrangement according to Figures 1 and 2 with a single relatively large molten bath.

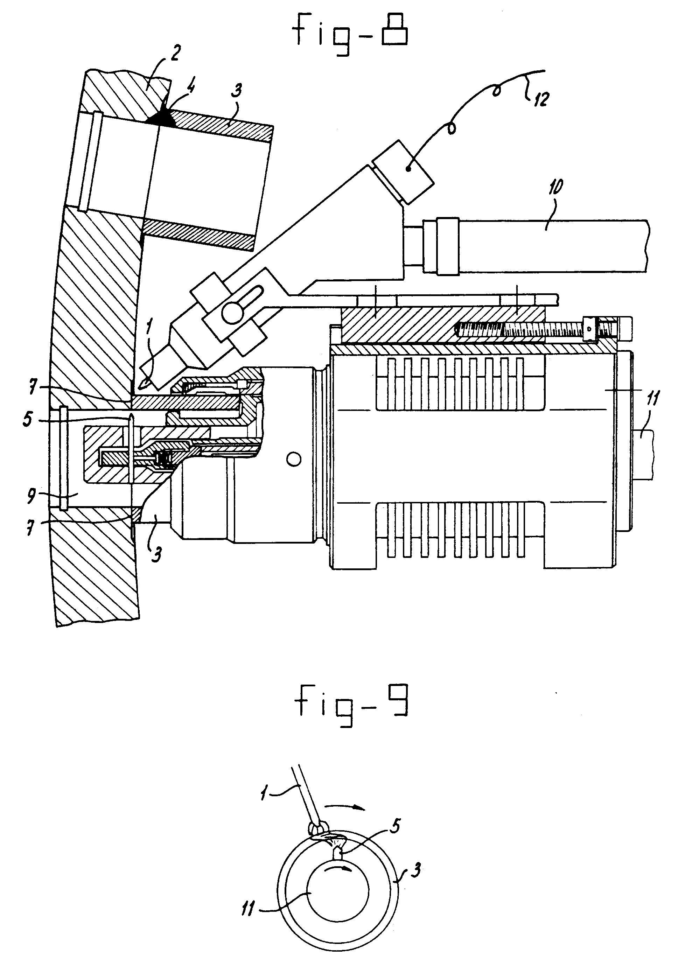

The state in which the molten baths according to the invention have flowed into each other is indeed achieved in the arrangement according to Figures 5, 6 and 7. Here the distance between the electrodes is reduced to 3 mm, i.e. the distances between the extensions of the centre lines, or to be precise the distance between the centre lines located perpendicular to the workpieces originating from the point of each of the electrodes. The electrodes do not, of course, need to be perpendicular to the workpieces as is depicted in the Figures.

The welding electrodes also do not need to be arranged in a manner such that the uppermost one in the drawing leads the lowermost. The reverse is also possible according to the invention.

At the position where the molten baths have made contact, a constricted channel 8 is therefore produced which is filled with molten material. Of course, this state arises only some time after the formation of the separate molten baths 4 and 6. In Figure 7 the constricted channel 8 is shown on a somewhat larger scale. As soon as this state involving the channel 8 is established, with the material thus being fluid everywhere on either side of the seam, the two electrodes 1 and 5 can be moved along the seam 7 with respect to the workpieces 2 and 3 to be welded to each other. The molten bath then travels through the seam 7 with the configuration depicted in Figure 5. At the rear side, on the left in Figure 6, the material solidifies along the solidification fronts indicated by the thinly drawn lines. As the velocity of travel of the welding electrodes is increased, the channel 8 will become narrower and if the velocity is too high it will even disappear, while as the velocity decreases the channel can also become much wider and even so wide that supporting action no longer originates from it.

As mentioned, Figure 5 shows a transverse section through the molten bath perpendicular to the seam 7 to be welded, the two workpieces again also being butted against each other. The seam 7 lies in the centre of the constriction 8 and of the molten baths 4 and 6. This is necessary so that the material of the two workpieces has flowed everywhere at the position of the melt.

As has been noted above, the constriction of the channel 8 must be such that the two baths 4 and 6 cannot flow away from each other as a result of capillary action with the unmelted walls of the said constricted channel. In the case drawn, if the electrode 5 is situated at the lower side In Figures 5 and 6, this means that the molten bath 6 is held joined by the capillary action of the channel 8 to the molten bath 4, while the said molten bath 4 is at the same time supported. Normally it is not possible to weld only from the lower side of the seam 7 because, particularly in the case of thick workpieces, the material of the melt would immediately flow away (see Figures 1 and 2). A narrow molten section at the upper side does not have sufficient capillary action to keep a large melt in place. If welding is done only from the upper side, the risk will be great with too large a melt section at the lower side of the seam that the entire melt flows away through the narrow opening produced at this point. In the method according to the invention this risk is much smaller and zero so long as the molten baths are kept small which is possible precisely in the case of the method according to the invention.

In the arrangement according to Figures 5 and 6 with the small distance between the electrodes 1 and 5, a current of 100 A is necessary for each of the welding electrodes. The reason for this drastic reduction is also that the leading molten bath 4 of the welding electrode 1 provides a pre-heating for the lagging molten bath 6 of the welding electrode 5. The same also, of course, occurs in the arrangement according to Figures 3 and 4, but in this case has less effect, partly because the first molten bath 4 has already resolidified. The method according to the invention therefore requires for the same plate thickness of 5 mm compared with the arrangement having only one electrode, a total welding current of only 200 A.

The total current would be 95 A for each of the welding electrodes if they were arranged transversely opposite each other, i.e. in line with each other. In that case, however, the channel 8 situated in between rapidly becomes too wide, as a result of which the molten bath can again easily flow away.

Even if the workpieces are not arranged horizontally as in Figures 1, 2 and 3, but vertically and the welding seam therefore extends horizontally, the two partial molten baths 4 and 6 are, of course, also held joined to each other by the constricted channel 8. The method according to the invention is therefore particularly well suited for welding procedures in which the position of the weld varies during the welding, as in the case of the welding of a circumferential seam.

Figure 8 shows the arrangement of two welding electrodes 1 and 5 for the butt welding of a pipe piece 3 and a pipe plate 2 to each other along the edge of the hole 9 in the said pipe plate 2 and indeed, to the surface of the said plate.

The electrodes 1 and 5 are mounted on an electrode holder 10 which, with the aid of the shaft 11, can be rotated in the direction of the arrow. The current is supplied for the electrode 1 via the diagrammatically shown current supply 1ead 12 and for the electrode 5 it can flow through the hollow shaft 11. Both the electrodes 1 and 5 are connected to separate current sources which can be separately adjusted to the desired welding current strength.

Figure 9 shows a transverse section through the welding seam of the arrangement according to Figure 8, in which the view is towards the butt end of a pipe piece 3. The pipe plate 2 is not visible in this Figure because it is situated in front of the plane of the drawing.

As is evident, the electrode 5 is displaced forwards with respect to the electrode 1 in the direction of movement indicated by the arrow. As a result of this the molten bath characteristic of this method is obtained with the constricted channel 8, as a result of which, over the whole circumference of the butt end of the pipe and also of the contact surface of the edge of the hole 9 of the pipe and also of the contact surface of the hole 9 of the pipe plate 2, the material of the seam becomes liquid or has been liquid.

It is evident from Figures 8 and 9 that the parts to be welded do not have a prepared welding seam. A prepared welding seam of this type can be omitted in the method according to the invention. The butt extremity of the pipe 3 can therefore be pressed against the wall of the plate 2 around the hole. The melt remains relatively small and is held in place by the capillary action of the channel 8 independently of its position as the electrodes 1 and 5 rotate in the circumferential direction.

It is obvious that the invention is not limited to the embodiments discussed above and depicted in the drawings, but that modifications and extensions are possible without going outside the scope of the invention.

**Claims**

1. Gas-protected arc welding method with non-fusible electrodes, by the use of at least two non-fusible electrodes (1, 5), which are arranged near the welding seam (7), opposite each other on either side of the workpieces (2, 3) to be joined to each other by welding and in which a current is supplied to each electrode (1, 5) having an intensity such that the partial molten baths (4, 6) formed by the welding electrodes on either side come into contact with one another, the said welding electrodes (1, 5) being displaced in the welding direction with respect to each other, characterized in that the welding electrodes (1, 5) are supplied in parallel with current from separate and separately adjustable welding sources, in which these welding currents are adjusted such with respect to each other that the trailing bath (6) of the one electrode (5) is in contact with the back edge of the leading bath (4) of the other electrode (1) through a constricted channel (8) of molten metal, such that two baths (4, 6) are held joined to each other by the capillary action of the constricted channel (8).

2. Arc welding method according to claim 1, characterized in that the mutual displacement of the welding electrodes (1, 5), and the welding current strength in each welding electrode (1, 5) and the velocity of movement of the electrodes (1, 5) with respect to the workpieces (2, 3) to be welded to each other are chosen in a manner such that taking account of the types of material and thicknesses of the workpieces (2, 3) to be welded to each other both partial molten baths (4, 6) are joined and remain joined to each other via a constricted melt (8) and thus form a combined aggregate melt.

3. Arc welding method according to claim 1 or 2, characterized in that more current is supplied to the first welding electrode (1) in the direction of movement than to the second welding electrode (5).

4. Arc welding method according to one of the preceding claims, characterized in that the distance between the free extremities of the two welding electrodes (1, 5) viewed in the direction of movement is at least approximately 1/3 of the thickness to be welded through of the workpieces to be welded.

**Revendications**

1. Méthode de soudage à l'arc avec gaz de protection à l'aide d'électrodes non fusibles, utilisant au moins deux électrodes non fusibles (1, 5), disposées à proximité de la jointure de soudure (7), opposées l'une à l'autre de chaque côté des pièces de travail (2, 3) devant être jointes l'une à l'autre par soudage et dans laquelle à chacune des électrodes (1, 5) est appliqué un courant ayant une intensité telle que les bains de fusion partiels (4, 6) formés par les électrodes de soudure de chaque côté viennent en contact l'un avec l'autre, les dites électrodes de soudage (1, 5) étant déplacées dans la direction de soudage en respect l'une avec l'autre, caractérisée en ce que les électrodes de soudage (1, 5) sont alimentées en parallèle avec du courant par des sources de soudage séparées et ajustables séparément, dans lesquelles ces courants de soudage sont ajustés l'un en rapport avec l'autre de telle façon que le bain arrière (6) de l'électrode (5) est en contact avec le bord inférieur du bain avant (4) de l'autre électrode (1) à travers un canal rétréci de métal en fusion. de telle façon que les deux bains (4, 6) sont tenus joints l'un à l'autre par l'action de capillarité du canal rétréci (8).

2. Méthode de soudage à l'arc selon la revendication 1, caractérisée en ce que le déplacement mutuel des électrodes de soudage (1, 5) et la force du courant de soudage dans chacune des électrodes (1, 5) et la rapidité du mouvement des électrodes (1, 5) en rapport avec les pièces de travail (2, 3) devant être soudées l'une à l'autre sont choisies de manière à tenir compte des types de matériaux et de l'épaisseur des pièces de travail (2, 3) devant être soudées l'une à l'autre, les deux bains de fusion (4, 6) partiels sont joints et restent joints l'un à l'autre par l'intermédiaire d'un canal rétréci (8) et forment ainsi une fusion globale combinée.

3. Méthode de soudage à l'arc selon la revendication 1 ou 2, caractérisée en ce que plus de courant est appliqué à la première électrode de soudage (1) dans la direction du mouvement que à la seconde électrode de soudage (5).

4. Méthode de soudage à l'arc selon l'une quelconque des revendications 1 à 3, caractérisée en ce que la distance entre les extrémités libres des deux électrodes de soudage (1, 5) vues dans la direction du mouvement est au moins approximativement 1/3 de l'épaisseur devant être soudée à travers les pièces de travail devant être soudées.

**Patentansprüche**

1. Schutzgaslichtbogenschweißverfahren mit nicht schmelzenden Elektroden mittels wenigstens zwei nicht schmelzender Elektroden (1,5), welche in der Nähe der Schweißnaht (7) einander gegenüber auf jeder Seite der Arbeitsstücke (2,3), welche durch Schweißen zusammengefügt werden sollen, angeordnet sind und worin jede Elektrode (1,5) mit Strom gespeist wird, der eine solche Intensität aufweist, daß die partiellen Schmelzbäder (4,6), welche durch die Schweißelektroden auf jeder Seite gebildet werden, miteinander in Kontakt kommen, wobei die Schweißelektroden (1,5) im Hinblick aufeinander in Schweissrichtung versetzt sind, **dadurch gekennzeichnet,** daß die Schweißelektroden (1,5) parallel mit Strom aus getrennten und getrennt einstellbaren Schweißquellen gespeist werden, worin diese Schweissströme im Hinblick aufeinander so eingestellt werden, daß das nachgeordnete Bad (6) der einen Elektrode (5) in Kontakt mit dem hinteren Rand des führenden Bades (4) der anderen Elektrode (1) über einen verengten Kanal (8) aus geschmolzenem Metall ist, so daß die beiden Bäder (4,6) miteinander durch die Kapillarwirkung des verengten Kanals (8) in Verbindung gehalten werden.

2. Lichtbogenschweißverfahren gemäß Anspruch 1, dadurch gekennzeichnet, daß die wechselseitige Anordnung der Schweißelektroden (1,5) und die Schweißstromstärke in jeder Schweißelektrode (1,5) sowie die Geschwindigkeit der Bewegung der Elektroden (1,5) im Hinblick auf die Arbeitsstücke (2,3), welche miteinander verschweißt werden sollen, unter Beachtung der Materialtypen und Dicken der Arbeitsstücke (2,3), welche miteinander verschweißt werden sollen, derart ausgewählt werden, daß beide partiellen Schmelzbäder (4,6) miteinander verbunden sind und via einem verengten Schmelzfluß (8) verbunden bleiben und so einen gemeinsamen Gesamtschmelzfluß bilden.

3. Lichtbogenschweißverfahren gemäß Anspruch 1 oder 2, dadurch gekennzeichnet, daß die erste Schweißelektrode (1) in Bewegungsrichtung mit mehr Strom gespeist wird als die zweite Schweißelektrode (5).

4. Lichtbogenschweißverfahren gemäß einem der vorangehenden Ansprüche, dadurch gekennzeichnet, daß der Abstand zwischen den freien äußeren Enden der beiden Schweißelektroden (1,5) in Bewegungsrichtung gesehen wenigstens annähernd 1/3 der durchzuschweissenden Dicke der zu verschweißenden Arbeitsstücke beträgt.

Fig-1

Fig-2

Fig-3

Fig-4

Fig-5

Fig-6

Fig-7

fig-8

fig-9